(19)

Europäisches
Patentamt
European
Patent Office
Office européen
des brevets

(11) **EP 2 390 993 A1**

(12) **EUROPEAN PATENT APPLICATION**

(43) Date of publication:
**30.11.2011 Bulletin 2011/48**

(51) Int Cl.:
**H02K 49/10** *(2006.01)*  **F16H 49/00** *(2006.01)*

(21) Application number: **10163875.7**

(22) Date of filing: **26.05.2010**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**
Designated Extension States:
**BA ME RS**

(71) Applicant: **Delphi Technologies, Inc.
Troyes, Michigan 48007 (US)**

(72) Inventor: **Farah, Philippe Siad
54400 Longwy (FR)**

(74) Representative: **Office Freylinger
P.O. Box 48
8001 Strassen (LU)**

(54) **Magnetic gear and camshaft assembly using such**

(57)    A magnetic gear comprises a first movable member (12) comprising a first set of magnetic elements (14) forming *ph* magnetic pole pairs; and a second movable member (16) comprising a number *ns* of pole pieces (18) in said air gap. A control member (20) comprises a second set of magnetic elements (22i) adapted to form *pl* magnetic poles pairs, the control member comprising at least a predetermined number of controllable magnetic elements ($22_2$) having selectable polarity. A controller (30) is configured to allow changing, in use, the polarity of the magnetic elements ($22_2$) of selectable polarity to modify the number of magnetic poles pairs on the control member (20) in such a way that the magnetic gear operates under one of the following conditions: *ns=pl+ph* or *ns=ph-pl* or *ns=pl-ph.*

Fig. 1a

EP 2 390 993 A1

**Fig. 1b**

**Description**

FIELD OF THE INVENTION

The present invention generally relates to a magnetic gear for transmitting a torque between two shafts with a selected gear ratio. The invention also concerns a particular, but non-limiting, application of this magnetic gear in an engine camshaft assembly.

BACKGROUND OF THE INVENTION

Magnetic gears are known as an alternative to mechanical reductors using e.g. planetary gear arrangements or harmonic drives. While magnetic gears may be used to connect-with a given gear ratio-a pair of rotating shafts in a variety of applications, there are many places of applications in an automotive engine.
One particular application of a magnetic gear is e.g. in an engine camshaft assembly, especially in a camphaser. As it is well known, in an internal combustion engine the crankshaft is coupled to the camshaft by means of a chain or toothed belt. For modern engine control, it is desirable to be capable of varying the phase of the cam, i.e. changing the cam lobe (valve lift event) timing to crankshaft timing while the engine is running, based on the parameters of the engine. Thereby, optimum values for fuel consumption and exhaust emissions can be obtained in different areas of the engine's operating characteristics. An elegant manner of varying the valve timing is realized by rotating the camshaft relative to its driving member, typically a sprocket wheel or pulley connected to the crankshaft via a chain, respectively a toothed belt.
Recent designs of cam phasers employ electric actuators in a configuration allowing their mounting at one end of the camshaft. The cam phaser typically has coaxial input and output members, the input member being coupled to the engine's sprocket wheel to act as drive member, while the output member is coupled to the camshaft. An electrically actuated adjusting mechanism drivingly connects the input and output members enabling selective angular adjustment of the output shaft while maintaining driving engagement between the input and output members. The adjusting mechanism may typically comprise a gearbox arrangement in the form of a planetary gear system or harmonic drive that is actuated in such a way as to advance or retard the phase by means of an electric motor.
An alternative solution with magnetic gear is disclosed in US 2007/0107685, which relates to a cam drive apparatus having a magnetic gear comprising an outer member having a plurality of circumferentially spaced permanent magnets, the outer member being mounted for rotation with one of the crankshaft and camshaft; an inner member comprising a plurality of circumferentially spaced magnets, the inner member being concentrically arranged within the outer member to define an annular gap there-between. An intermediate member comprising a plurality of circumferentially spaced ferromagnetic pole pieces is located within the annular gap between the inner and outer members and is mounted for rotation with the other of the crankshaft and camshaft. An electric motor is connected to the inner member and allows increasing or decreasing the camshaft speed by varying the speed of the inner member through appropriate actuation by the electric motor, either by increasing or decreasing the motor speed or, under certain conditions inverting the motor rotating direction.

OBJECT OF THE INVENTION

The object of the present invention is to provide an alternative type of magnetic gear that is particularly, but not exclusively, susceptible of application in a camshaft assembly.
This object is achieved by a magnetic gear as claimed in claim 1.

SUMMARY OF THE INVENTION

A magnetic gear in accordance with the present invention comprises:

a first movable member comprising a first set of magnetic elements adapted to form a number *ph* of magnetic pole pairs;

a control member with a second set of magnetic elements adapted to form a number *pl* of magnetic poles pairs, the control member being separated by an air gap from the first movable member; and

a second movable member comprising a number *ns* of pole pieces arranged in said air gap;

wherein the control member comprises at least a predetermined number of controllable magnetic elements having selectable polarity.

The magnetic gear further comprises a controller configured to allow changing, in use, the polarity of said electromagnets of selectable polarity to modify the number of magnetic poles (respectively pole pairs) on the control member in such a way that the magnetic gear operates under one of the following conditions: *ns=pl+ph* or *ns=ph-pl* or *ns=pl-ph.*

As it is used herein, the term "pole" designates a region of a member of given polarity. The term "pole pair" then means that there is one North pole and one South pole. As it will be understood by those skilled in the art, one magnetic pole can consist of one magnetic element or a group of neighbouring magnetic elements of same polarity.

As it is known in the art, the angular speed of a conventional magnetic gear comprising two concentric rotors with permanent magnets and in-between a rotor with pole pieces normally has a fixed gear ratio.

A merit of the present invention is to have thought of a system where the stator has a controllable configuration of magnetic poles to allow switching the number of magnetic poles from a "gear-wise" configuration to an "anti-gear-wise" configuration, and vice-versa. And this for a same value of reduction ratio. Hence, the present magnetic gear provides a system with a simple possibility to inverse the direction of rotation, at a constant reduction ratio.

As it will be explained below, the relations *ns=pl+ph* or *ns=ph-pl* are two possible conditions for rotation in one direction, while ns=pl-ph is a condition for rotation in the other, opposite direction. The controller is thus advantageously configured to operate the stator only in these gear-wise and anti-gear-wise conditions, as required by an external signal provided by the system to which the magnetic gear is associated.

It is further to be appreciated that the prescribed relationships between ns, *pl* and *ph* have been selected for a proper operation of the magnetic gear, not all relationships being allowable in that respect, as it will be understood by those skilled in the art.

From the practical point of view, the required number of controllable magnetic elements on the control shaft may be at least equal to LCM(ns-ph; ns+ph), where LCM means the lowest common multiple. Such magnetic elements of controllable polarity may typically be electro-magnets, the polarity of which is easily inverted by reversing the current direction. As it is clear, the stator may consist of electromagnets only, in which case all magnetic elements are controllable. In such case, the control and wiring will be carried out to allow the desired operation modes as defined above.

In one embodiment, the second set of magnetic elements consists of permanent magnets and electromagnets, the number of electromagnets being determined to provide pl poles of selectable polarity, where pl=LCM(ns-ph; ns+ph). The use of permanent magnets is of interest in some applications where a residual gear ratio is desirable when the electro-magnets are not powered.

The first set of magnetic elements preferably consists of permanent magnets, which provides a brushless device. It is however clear that electro-magnets can be used instead of permanent magnets to provide the same configuration of pole pairs.

Alternatively, the first movable member with the first set of magnetic elements may take the form of a so-called squirrel cage rotor. The gear ratio is then multiplied by the slip coefficient, as it is clear to those skilled in the art.

As it will also appear to those skilled in the art, the gear ratio may be constructed with the first movable member, second movable member and control member in axial or in radial configurations.

The present magnetic gear may find a variety of applications, where two rotating shafts are to be coupled with a certain gear ratio and where it is desirable to selectively switch between a gear-wise or anti-gear-wise rotation of the shafts.

Amongst the possible applications of the present magnetic gear, one is that of a cam phaser for an internal combustion engine.

A camphaser for an internal combustion engine may comprise coaxial input and output members as well as adjusting means drivingly connecting said input and output members enabling said input and output members to be selectively, angularly adjusted while maintaining driving engagement therebetween, the adjusting means featuring a magnetic gear as defined hereinabove. The adjusting means may e.g. comprise a harmonic drive or planetary gearing system.

Accordingly, the present invention also concerns a valve train for an internal combustion engine comprising a camshaft and a variable cam phaser as defined hereinabove.

BRIEF DESCRIPTION OF THE DRAWINGS

The present invention will now be described, by way of example, with reference to the accompanying drawings, in which:

FIG. 1: is a diagram of a first embodiment of the present magnetic gear in anti-gear-wise (a) and gear-wise (b) operating conditions, wherein the stator comprises permanent magnets and electromagnets;

FIG. 2: is a diagram of a second embodiment of the present magnetic gear in anti-gear-wise (a) and gear-wise (b) operating conditions, wherein the stator comprises electromagnets only;

FIG. 3: is a diagram of a third embodiment of the present magnetic gear in anti-gear-wise (a) and gear-wise (b) operating conditions;

FIG. 4: is a sketch illustrating the succession of polarities in the stator of Fig.1 for the anti-gear-wise and gear-wise rotating conditions;

FIG. 5: is a principle diagram illustrating an application of the magnetic gear in an engine cam phaser (in half section view); and

FIG. 6: is a diagram of a further variant of the present gear ratio similar to Fig.1 but where the inner rotor is embodied as squirrel cage rotor.

DETAILED DESCRIPTION OF PREFERRED EMBODIMENTS

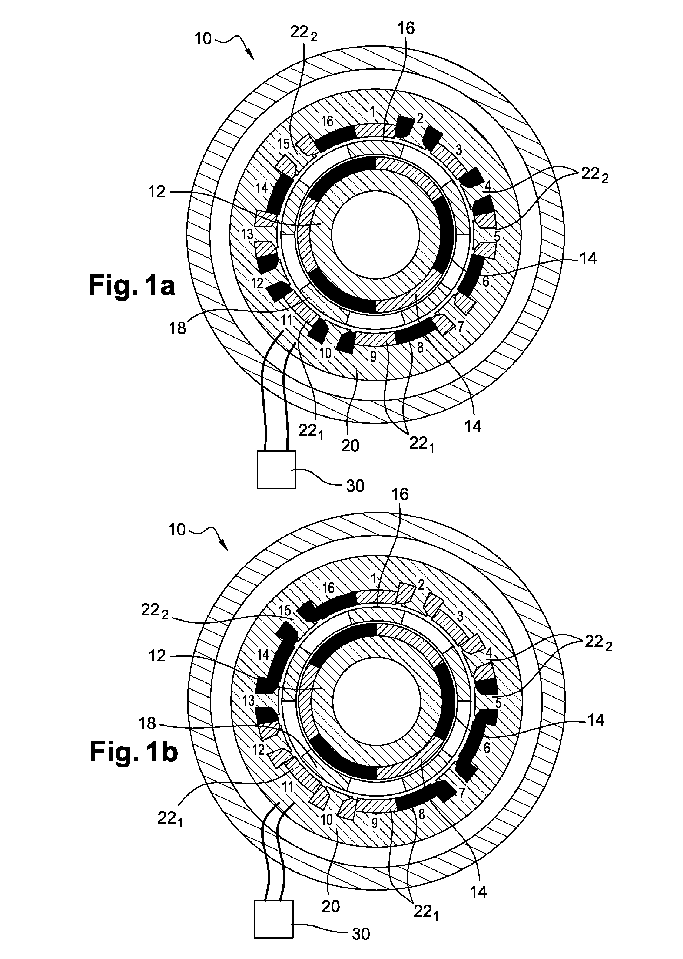

A preferred embodiment of the present magnetic gear 10 is shown in Fig.1a. It comprises a first movable member 12 with a first set of magnetic elements 14 and a second movable member 16 with a set of pole pieces 18. Reference sign 20 generally indicates a stationary control member with a set of magnetic elements $22_1$ and $22_2$, the second movable member 16 being arranged in an air gap in-between the first movable member 12 and the stator 20.

In the present variant the magnetic gear 10 is in a radial configuration, whereby the first and second movable members 12 and 16 take the form of rotors or rings. They are mounted to be independently rotatable relative to one another. The first rotor preferably carries magnetic elements 14 in the form of permanent magnets. They are circumferentially distributed and arranged with their north and south poles at their radially inner and outer ends and orientated with alternating polarity so that each of the magnets has its pole facing in the opposite direction to the magnets on either side of it.

As it can be seen from the drawing, there are 6 permanent magnets that form 6 magnetic poles. In the notation adopted herein, the inner rotor 12 comprises *2ph* magnetic poles or *ph* pole pairs, and in this embodiment *ph=3.*

The second rotor 16 preferably consists of an annular non-magnetic support that carries a set of *ns* circumferentially distributed pole pieces; here *ns=5.*

The stator 20 in turn also has a ring shape and is concentrically arranged around the two rotors 12 and 16. The stator 20 is configured to comprise 2pl magnetic poles, respectively *pl* pole pairs formed by a second set of magnetic elements. It shall be appreciated that control stator 20 comprises at least a predetermined number of controllable magnetic elements having selectable polarity. Accordingly, in the present embodiment the stator comprises both permanent magnets $22_1$ and electromagnets $22_2$, the latter forming the magnetic elements of controllable polarity.

It shall further be appreciated that the present magnetic gear 10 comprises a controller 30 configured to allow changing, in use, the polarity of said electromagnets $22_2$ of selectable polarity to modify the number of magnetic poles pairs on the control member 20 in such a way that the magnetic gear operates under one of the following conditions: *ns=pl+ph* or *ns=ph-pl or ns=pl-ph.* Indeed, as will be explained later, this provides a magnetic gear 10 with a predetermined gear ratio and the rotation of which can be easily selected.

In the configuration of Fig.1 a) the control stator has 8 pole pairs while in the configuration of Fig.1 b) the control stator has 2 pole pairs, which can be obtained by simply inverting the polarity of all electromagnets $22_2$ in the control stator. In the Fig.1 a) configuration, each of the 16 individual magnetic elements 22i forms a pole (thus forming 8 pole pairs); while in the configuration of Fig.1 b) the 16 magnets 22i are grouped by 4 to form only 2 pole pairs.

The principle of operation of the present magnetic gear will now be explained in more detail with respect to the first embodiment of Fig.1. The general theory about magnetic gears has been known for long, as well as the relationships between rotating speeds and the ratios between magnetic poles and pole pieces (in this regard, see e.g. US 3,378,710 to Martin).

A merit of the present invention is to have thought of using a control member with selectively configurable magnetic poles in order to be able to invert the sign of the gear ratio (i.e. reverse the rotating direction), and to have identified the required relationships between pole pairs and pole pieces for this purpose.

Accordingly, gear-wise operation is possible under the following conditions:

$$ns = pl + ph \text{ or } ns = ph - pl \qquad \text{(eq.1)}$$

With the first rotor 12 as input, the output speed of the second rotor 16 can be written:

$$\Omega_{R2} = \frac{ph}{ns}\Omega_{R1} \quad \text{(eq. 2)}$$

where $\Omega_{R2}$ and $\Omega_{R1}$ represent the angular speed of second rotor and inner, first rotor respectively.

Conversely, anti-gear-wise operation is obtained by operating under the following condition:

$$ns = pl - ph \quad \text{(eq. 3)}$$

The corresponding output speed can be written:

$$\Omega_{R2} = -\frac{ph}{ns}\Omega_{R1} \quad \text{(eq. 4)}$$

Hence, it is possible to operate at the same gear ratio (depending on the ratio ph to ns) in either directions by simply controlling the number of pole pairs on the control stator. As it is conventional in the art, the term gear-wise indicates that the gear members rotate in same direction, while anti-gear-wise means that the rotors turn in antagonist directions.

To be able to pass from a configuration with 8 pole pairs on the stator to 2 pole pairs, the position of the magnetic elements 22i needs to be precisely determined. In particular, the alternation of polarities in the stator 20 remains the same: a given pole sees on both its circumferential ends a pole of opposite polarity.

This thus requires an appropriate positioning of the electromagnets $22_2$, which can easily be deduced from the gear ratio parameters.

Indeed, setting the gear ratio imposes selecting the number of pole pairs *(ph)* on the inner rotor 12 and of pole pieces (*ns*) in the second rotor 16, since the gear ratio depends thereon according to equations 2 and 4.

The number of pole pairs *pl* in the stator 20 must then be such as to allow gear-wise and anti-gear-wise rotation of the rotors, according to equations 1 and 3. While it can be determined on a case by case basis, a general approach consists in determining *pl* as the Least Common Multiple between (ns-ph) and (ns+ph):

pl = LCM (ns-ph; ns+ph)

Applying this to the present embodiment pl = LCM(5-3 ; 5+3)=8.

This implies that (with R1=input and R2=output):

-    a stator configuration with 8 pole pairs will provide anti-gear-wise according to $\Omega_{output}$ =

$$-\frac{ph}{ns}$$

$\Omega_{input}$ ;

-    a stator configuration with 2 pole pairs will provide gear-wise rotation according to $\Omega_{output}$ =

$$\frac{ph}{ns}$$

$\Omega_{input}.$

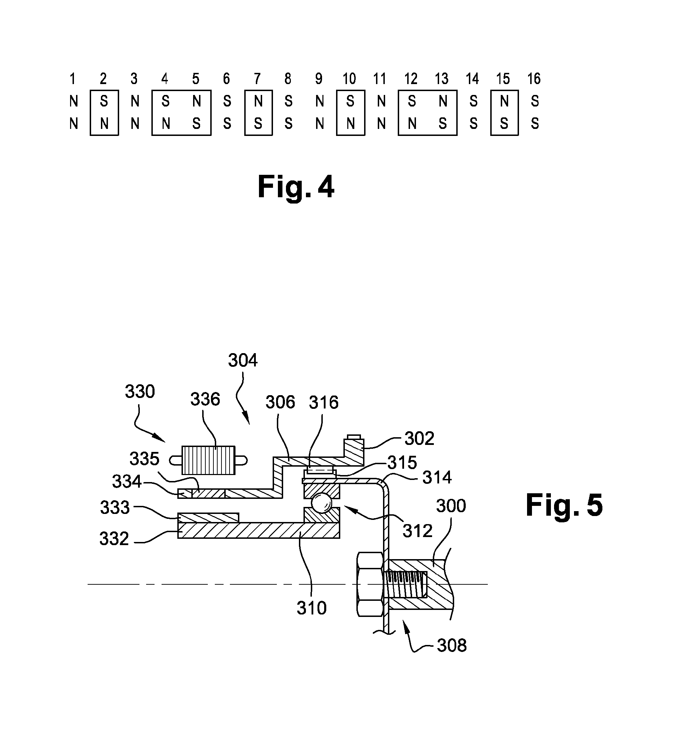

The location of the electromagnets $22_2$, and thus the sequence of permanent magnets $22_1$ and electromagnets $22_2$ can easily be determined by writing the pole sequence in both configurations, as shown in Fig.4.

The first line in Fig.4 indicates the ordinal number attributed to the magnet locations on the control stator. The second line indicates the pole sequence in the stator in the anti-gear-wise configuration of Fig.1a), requiring 8 pole pairs as explained.

The third line finally indicates the pole sequence providing the required 2 pole pairs in the stator 20 for gear-wise operation. In this case the magnets are obviously grouped by 4, which is required to provide the desired alternation of polarities for the *pl* poles pairs.

The two sequences of magnet polarities being written, the location of the electromagnets can easily be determined and is indicated by the frames in Fig.4. Accordingly, electromagnets $22_2$ are provided at positions 2, 4, 5, 7, 10, 12, 13 and 15.

As it can be observed, it suffices to invert the polarities in the electromagnets (i.e. invert the current therein) to switch from a gear-wise to anti-gear-wise configuration.

This is thus an extremely simple way of inverting the relative rotating direction between the two rotors, without the need for any angular sensor or the like, the rotating direction being imposed by the magnets $22_i$ configuration, and thus of the magnetic poles, according to equations 1 and 3.

It remains to be noted that in the Figs., only the polarity of the relevant radial ends of the magnets are represented, for clarity reasons, since magnets and electromagnets have two poles and are radially oriented. This means the radial inner ends of the stator magnets and the radial outer ends of the inner rotor are shown; a hatched pattern is used for North polarity while black for South polarity.

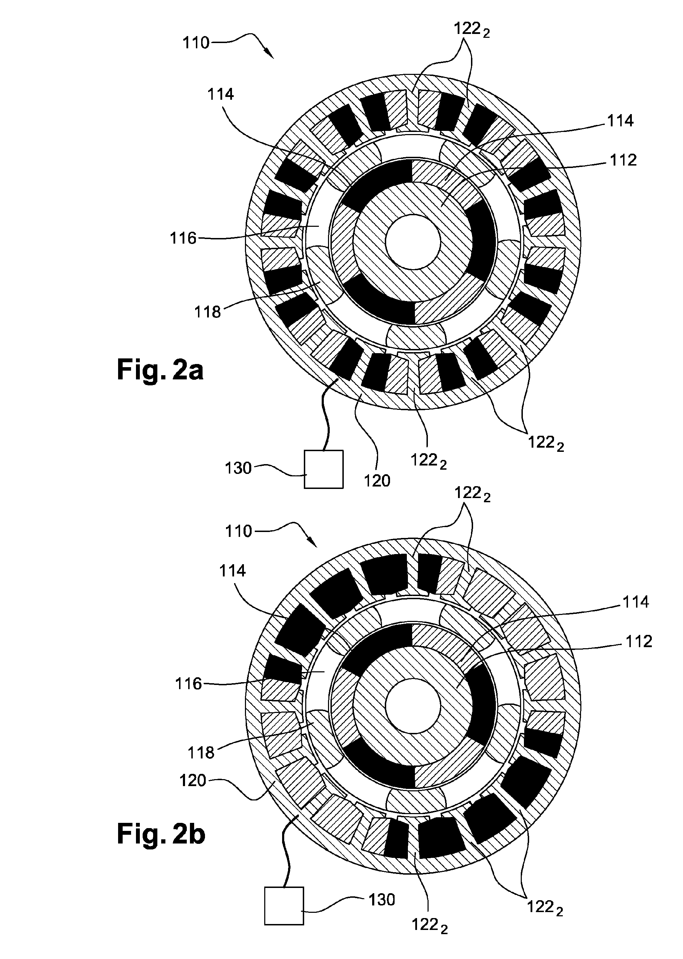

Turning now to Fig.2, another embodiment of the present magnetic gear is shown, and like elements are indicated by same reference signs, increased by 100 with respect to Fig.1. The essential difference with the embodiment of Fig.1 is that here, all of the magnetic elements are electromagnets $122_2$.

But the performance of the magnetic gear 110 is the same. The gear ratio is the same with *ph*=3 and *ns*=5. Also, the required pole pairs for gear-wise or anti-gear-wise operation are the same.

In fact, it is equivalent to replacing the permanent magnets of Fig.1 by electromagnets of same polarities in both configurations of Fig.2 a) and b).

From the control point of view, one can proceed as in the embodiment of Fig.1, where precise magnet $122_2$ locations are known, the polarity of which is switched to provide the desired operating conditions. Or more simply, if the electromagnets $122_2$ are wound and controllable individually, the controller 130 can energize every other individual magnet $122_2$ in the same manner to provide 16 poles of alternating polarities, or energize four neighbouring electro-magnets $122_2$ in the same manner so that four magnets form one pole, and provide 2 pole pairs in the stator 120.

As it will be understood by those skilled in the art, electromagnets are used herein in their capability to simulate a permanent magnet of desired polarity. They are thus typically supplied with DC current and the current direction will be inversed when required, to provide the desired operating condition (equations 1 and 3), as the case may be depending on the need for driving the output shaft connected to the output rotor.

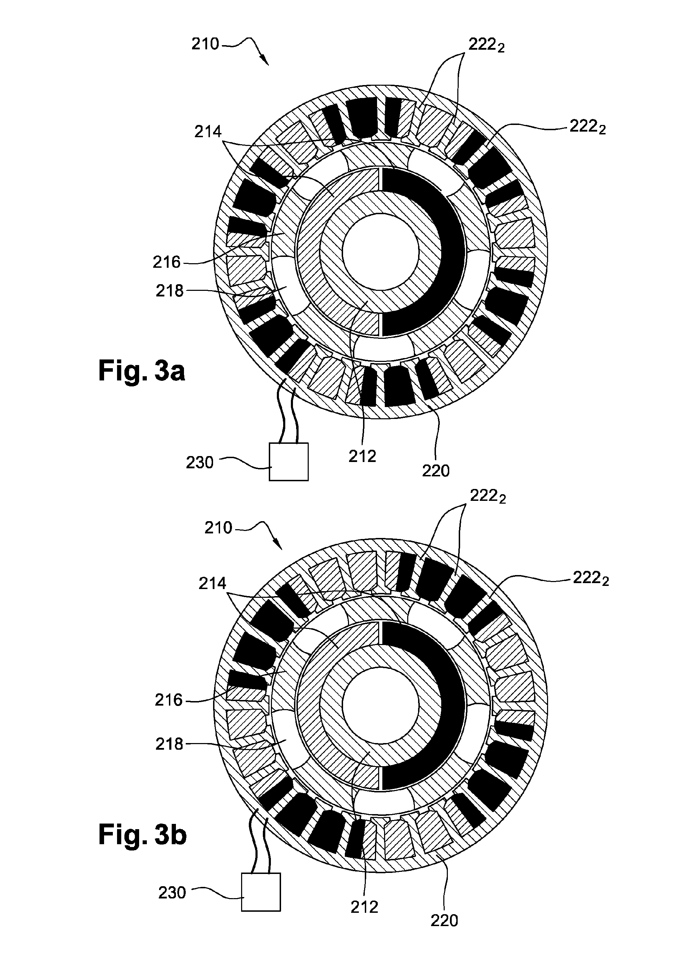

A further embodiment of the present magnetic gear is shown in Fig.3; like elements are indicated with same reference signs, augmented by 200 with regard to Fig.1. In this case the magnetic gear 210 has a gear ratio of 1/5, with *ph*=1 and *ns*=5. Here again, the magnetic elements $222_2$ on the stator 220 are all electromagnets.

As explained above, the minimum required number of pole pairs *pl* on the stator 220 to allow reversing the rotation with same gear ratio is obtained via the LCM: pl = LCM(5-1 ; 5+1 )=12.

Hence a minimum of 12 electromagnets $222_2$ is required on the stator 220 to be able to operate with 6 or 4 pole pairs, as required by the above formulas for anti-gear-wise or gear-wise operation, respectively.

In the embodiment shown in Fig.3, the stator 220 actually comprises a set of 24 electromagnets $222_2$, that are grouped by 2 in the configuration of Fig.3a) providing 6 pole pairs; and grouped by 3 in the configuration of Fig.3b) providing 4 pole pairs.

In the above embodiments, the inner, first rotor 12, 112 and 212 is provided with permanent magnets. This is particularly interesting because it provides a brushless magnetic gear. It is however clear that these permanent magnets could be replaced by electromagnets polarized and arranged in the same way; from the implementation point of view it has the disadvantage of requiring brushes, slip rings and the like. Another option for the inner rotor is to use a so-called squirrel cage rotor with e.g. aluminium or copper conductive bars, as conventionally used in AC induction motors. When using a squirrel cage, the gear ratio is corrected by the slip coefficient.

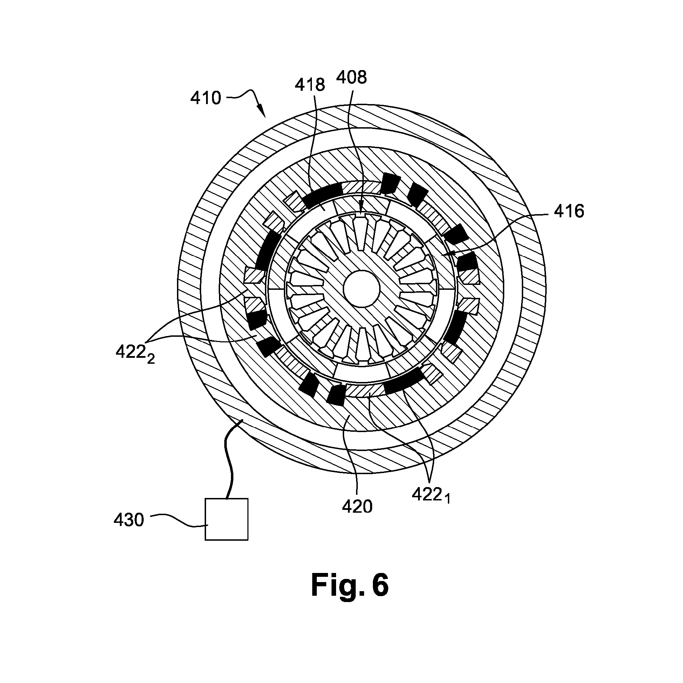

Fig.6 shows a variant of the present magnetic gear 410 with a squirrel cage rotor 408 as the inner, first rotor. In this particular case, the squirrel cage is a 6 poles and 3 phases windings, thus the 18 slot areas shown in Fig. 6. Accordingly there are 3 poles pairs: ph=3. The other elements are identical to those of the embodiment of Fig.1, and are thus indicated by same reference signs increased by 400. In particular the stator 420 and second rotor 416 are identical to those of Fig.1.

In this case, taking into account the slip coefficient, the gear ratio becomes: $\pm$ 5/3 x slip, depending on whether pl= 8 or 2.

An advantageous application of the present magnetic gear will now be explained with respect to Fig.5, which is a principle diagram of an engine cam phaser comprising the present magnetic gear. As it is known, a cam phaser is used in an internal combustion engine valve train to vary the phase of the cam, i.e. changing the cam lobe (valve lift event) timing to crankshaft timing while the engine is running, based on the parameters of the engine.

Referring to Fig.5, reference sign 300 indicates a camshaft driven by a driving member 302, taking the form of a sprocket wheel, which is connected to the engine crankshaft via a chain or toothed belt (not shown). A cam phaser, generally indicated 304, is mounted at one end of the camshaft 300 for driving the latter and for selectively rotating the camshaft 300 relative to the sprocket wheel 302.

The cam phaser 304 comprises an input shaft 306 rotationally coupled to the sprocket wheel 302 and an output member 308 rotationally coupled to the camshaft 300 and being coaxial in rotation therewith. Adjusting means are drivingly connecting the input shaft 306 and output member 308, enabling the latter to be selectively, angularly adjusted while maintaining driving engagement there between.

More specifically, the cam phaser 304 comprises a harmonic drive operated by the present magnetic gear and coupling the input shaft 306 to the output member 308, the latter being coaxially rotatable. Conventionally, the harmonic drive comprises a wave generator formed by an inner annular member 310 with an elliptical outer profile on which an outer ball bearing 312 is mounted.

The outer ring of the roller bearing 312 is connected to a flexible, externally toothed flex spline 314 that is configured as a whole like a pot and that communicates with the camshaft 300, the vertical end of the flex spline forming the output member 308.

The external thread 315 of the flex spline 314 cooperates with a rigid, internally toothed circular spline 316 integrated in the input shaft 306. The flex spline 314 may typically have two teeth less than the circular spline 316. Consequently, when the wave generator makes one revolution, the flexspline 314 regresses by two teeth relative to the circular spline 316.

It is to be appreciated that the adjusting means further comprise a magnetic gear 330 of the kind described above, for selectively operating an angular adjustment between the input shaft 306 and output member 308. Accordingly, the magnetic gear's inner rotor 332 with permanent magnets 333 is integral in rotation with the wave generator. The intermediate, second rotor 334 with pole pieces 335 is integral in rotation with the input shaft 306. The control stator 336 is concentrically arranged around the two rotors 332 and 334. The stator 336 is configured to be able to vary the number of pole pairs. A controller (not shown) is provided that allows operating the magnetic gear according to equations 1 and 3, depending on the desired rotating direction.

This cam phaser thus uses an integrated magnetic gear with variable gear ratio as described above instead of a conventional electric machine (electric motor). In this application, the control stator 336 preferably uses a combination of permanent magnets and appropriately positioned electromagnets, as this provides a fixed gear ratio even without supplying the electromagnets. This is of advantage since there is no need for a mechanical return spring (as conventionally provided in cam phasers with harmonic drives), since the inner shaft will rotate even without current in the stator, and therefore the cam shaft will tend to move to a default position (either advance or retard).

The angular speed relationships can be mathematically expressed as follows:

$$\Omega_{camshaft} - \Omega_{sprocket} = \frac{1}{r_{gear\_ratio}} \times (\Omega_{sprocket} - \Omega_{control})$$

$$\Omega_{control} = r_{MagGear\ ratio} \times \Omega_{sprocket}\ (or\ \Omega_{camshaft})$$

$$\Omega_{camshaft} - \Omega_{sprocket} = \frac{1 - r_{MagGear\ ratio}}{r_{gear\_ratio}} \times \Omega_{sprocket}$$

$$If\ r_{MagGear\ ratio} > 1: \Omega_{camshaft} - \Omega_{sprocket} < 0 \Rightarrow RETARD$$

$$If\ r_{MagGear\ ratio} < 1: \Omega_{camshaft} - \Omega_{sprocket} > 0 \Rightarrow ADVANCE$$

where:

$\Omega_{camshaft}$ : is the angular speed of the camshaft 300;
$\Omega_{sprocket}$ : is the angular speed of the sprocket wheel 302;
$\Omega_{control}$ : is the angular speed of the inner rotor 332 rotating the wave generator;
$r_{MagGear\_ratio}$ : is the gear ratio of the magnetic gear 330;
$r_{gear-ratio}$ : is the gear ratio of the mechanical gear, i.e. the harmonic drive in the embodiment of Fig.5.

Also, compared to a conventional electric machine, no position sensor is required since the direction of rotation is determined by the setting of the magnetic poles on the stator 330, as already explained above. For the cam phase control, the camshaft position is known from the conventional camshaft transmitter disc system.
As it will be understood by those skilled in the art, a planetary gear or like mechanism may be used instead of the harmonic drive in such cam phaser application.
In the above embodiments, the magnetic gear is shown in radial configuration, but it is clear that it can also be implemented in axial configuration. Also, still with respect to the radial configuration, the stator can be installed in the centre and the first movable member as external rotor.
It remains to be noted that equations (1) to (4) are of general applicability, i.e. they are applicable whether R1 is the input rotor and R2 the output rotor, or vice-versa.

**Claims**

1.  A magnetic gear comprising:

    a first movable member (12, 112, 212; 332; 408) comprising a first set of magnetic elements (14, 114, 214, 333) adapted to form *ph* magnetic pole pairs;
    a control member (20, 120, 220, 336; 420) with a second set of magnetic elements (22, 122, 222, 422) adapted to form *pl* magnetic poles pairs, said control member being separated by an air gap from said first movable member (12, 112, 212; 332; 408);
    a second movable member (16, 116, 216, 334, 416) comprising a number *ns* of pole pieces in said air gap;
    wherein the control member (20, 120, 220, 336; 420) comprises at least a predetermined number of controllable magnetic elements ($22_2$) having selectable polarity, and
    wherein said magnetic gear comprises a controller (30, 130, 230, 430) configured to allow changing, in use, the polarity of said magnetic elements ($22_2$, $122_2$, $222_2$, $422_2$) of selectable polarity to modify the number of magnetic poles pairs on said control member (20, 120, 220, 336; 420) in such a way that said magnetic gear operates under one of the following conditions: *ns=pl+ph* or *ns=ph-pl* or *ns=pl-ph.*

2.  The magnetic gear according to claim 1, wherein said controller (30, 130, 230, 430) is configured to operate said control member only under said conditions.

3.  The magnetic gear according to claim 1 or 2, wherein the number of controllable magnetic elements on the control shaft is at least equal to LCM(ns-ph; ns+ph).

4. The magnetic gear according to claim 1 or 2, wherein the second set of magnetic elements consists of permanent magnets and electromagnets, the number of electromagnets being determined to provide *pl* poles of selectable polarity, where pl=LCM(ns-ph; ns+ph).

5. The magnetic gear according to claim 1, 2 or 3, wherein the second set of magnetic elements consists of electromagnets ($122_2$, $222_2$).

6. The magnetic gear according to any one of the preceding claims, wherein the first set of magnetic elements comprises electromagnets and/or permanent magnets.

7. The magnetic gear according to any one of claims 1 to 5, wherein the first movable member with the first set of magnetic elements is a squirrel cage rotor (408).

8. The magnetic gear according to any one of the preceding claims, wherein the first movable member, second movable member and control member are in axial or radial configuration.

9. The magnetic gear according to any one of the preceding claims, wherein each magnetic pole is formed by one or more magnetic elements.

10. A camphaser for an internal combustion engine comprising a magnetic gear according to any one of the preceding claims.

11. A camphaser for an internal combustion engine, said camphaser comprising coaxial input (306) and output members (308) as well as adjusting means drivingly connecting said input and output members enabling said input and output members to be selectively, angularly adjusted while maintaining driving engagement therebetween, said adjusting means featuring a magnetic gear (330) according to any one of claims 1 to 9.

12. The camphaser according to claim 11, wherein said adjusting means comprise a harmonic drive or planetary gearing system.

13. A valve train for an internal combustion engine comprising a camshaft, a camshaft driving member and a camphaser according to claim 11 or 12 mounted to said camshaft.

**Fig. 1a**

**Fig. 1b**

110

122₂

114

114

112

116

118

**Fig. 2a**

130

120

122₂

122₂

110

122₂

114

114

112

116

118

120

**Fig. 2b**

130

122₂

122₂

210

$222_2$

214

$222_2$

216

218

**Fig. 3a**

230                212        220

210

$222_2$

214

$222_2$

216

218

**Fig. 3b**

230                212        220

EP 2 390 993 A1

| 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|
| N | S | N | S | N | S | N | S | N | S | N | S | N | S | N | S |
| N | N | N | N | S | S | S | S | N | N | N | N | S | S | S | S |

# Fig. 4

# Fig. 5

14

**Fig. 6**

Europäisches
Patentamt
European
Patent Office
Office européen
des brevets

**EUROPEAN SEARCH REPORT**

Application Number

EP 10 16 3875

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 3 050308 A (NIPPON SOKEN; NIPPON DENSO CO) 4 March 1991 (1991-03-04)<br>* abstract; figures 1-8 *<br>----- | 1-13 | INV.<br>H02K49/10<br>F16H49/00 |
| A | JP 2003 304677 A (SUMITOMO METAL IND) 24 October 2003 (2003-10-24)<br>* abstract; figures 1-10 *<br>----- | 1-13 | |
| A | US 2003/005899 A1 (SCHEIDT MARTIN [DE]) 9 January 2003 (2003-01-09)<br>* page 2, paragraph 16 - page 3, paragraph 20; figures 1-3 *<br>----- | 1-13 | |
| | | | TECHNICAL FIELDS SEARCHED (IPC)<br><br>H02K<br>F16H |

The present search report has been drawn up for all claims

| Place of search | Date of completion of the search | Examiner |
|---|---|---|
| Munich | 1 December 2010 | Tangocci, Antonio |

EPO FORM 1503 03.82 (P04C01)

**ANNEX TO THE EUROPEAN SEARCH REPORT
ON EUROPEAN PATENT APPLICATION NO.**

EP 10 16 3875

This annex lists the patent family members relating to the patent documents cited in the above-mentioned European search report.
The members are as contained in the European Patent Office EDP file on
The European Patent Office is in no way liable for these particulars which are merely given for the purpose of information.

01-12-2010

| Patent document cited in search report | | Publication date | Patent family member(s) | | Publication date |
|---|---|---|---|---|---|
| JP 3050308 | A | 04-03-1991 | NONE | | |
| JP 2003304677 | A | 24-10-2003 | JP | 3858839 B2 | 20-12-2006 |
| US 2003005899 | A1 | 09-01-2003 | DE | 10116707 A1 | 10-10-2002 |

EPO FORM P0459

For more details about this annex : see Official Journal of the European Patent Office, No. 12/82

**EP 2 390 993 A1**

**REFERENCES CITED IN THE DESCRIPTION**

**Patent documents cited in the description**

- US 20070107685 A

- US 3378710 A, Martin